Europäisches Patentamt

European Patent Office

Office européen des brevets

(11) Publication number: **0 141 459**
**B1**

(12) EUROPEAN PATENT SPECIFICATION

(45) Date of publication of patent specification: **11.01.89**

(21) Application number: **84201507.5**

(22) Date of filing: **18.10.84**

(51) Int. Cl.⁴: **H 04 N 5/44,** H 04 N 5/21,
H 04 N 7/08

(54) Television receiver arrangements.

(30) Priority: **24.10.83 GB 8328334**

(43) Date of publication of application:
**15.05.85 Bulletin 85/20**

(45) Publication of the grant of the patent:
**11.01.89 Bulletin 89/02**

(84) Designated Contracting States:
**DE FR GB IT SE**

(56) References cited:
**DE-A-1 932 936**
**DE-A-2 951 023**
**DE-A-3 016 123**

(73) Proprietor: **PHILIPS ELECTRONIC AND
ASSOCIATED INDUSTRIES LIMITED
Philips House 188 Tottenham Court Road
London W1P 9LE (GB)**
㊴ **GB**

(73) Proprietor: **N.V. Philips' Gloeilampenfabrieken
Groenewoudseweg 1
NL-5621 BA Eindhoven (NL)**
㊴ **DE FR IT SE**

(72) Inventor: **Tarrant, David Robert
C/O MULLARD LIMITED New Road
Mitcham Surrey CR4 4XY (GB)**

(74) Representative: **Boxall, Robin John et al
PHILIPS ELECTRONICS Patents and Trade Marks
Department Centre Point New Oxford Street
London WC1A 1QJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to television receiver arrangements of a kind (hereinafter referred to as being "of the kind specified") suitable for use in a television transmission system of a character in which coded data pulses representing alpha-numeric text or other information are transmitted in a television signal in television lines where no picture signals representing normal picture information are present.

The possibility does exist, for a television transmission system of the above character. of so-called "full-channel" operation in which all of the television lines of each field are employed for transmitting coded data pulses. However. in existing television transmission systems of the above character, only television lines in the field-blanking intervals are employed for the transmission of the coded data pulses, so that such transmission is, in effect, multiplexed with the normal picture transmission. The alpha-numeric text or other information transmitted in this way can be displayed as a selectable alternative to the normal picture information by the use of a suitably adapted television receiver arrangement which can acquire the coded data pulses from the television signal. A television transmission system of the above character may be of the over-air broadcast type, or of the type which uses a cable as the transmission medium.

A television transmission system of the above character is described in United Kingdom patent specificatlon GB-A-l 370 535. Also, the publication "Broadcast Teletext Specification", September 1976, published jointly by the British Broadcasting Corporation, Independent Broadcasting Authority and British Radio Equipment Manufacturers' Association, gives details of a specification for a system of the above character.

In the above-identified Broadcast Teletext Specification, a quantity of information to be displayed as an entity on a television screen is termed a page and will be so termed hereinafter. All of the pages which are available for display are transmitted in a recurrent cycle, with or without up-dating page information as appropriate. At the adapted television receiver arrangement a viewer can request any page for display, the requested page being acquired from the cyclic transmission the next time it occurs therein and stored in a display memory of the television receiver arrangement until replaced by a subsequently acquired page.

A television receiver arrangement of the kind specified includes data selection and acquisition means for acquiring selectively coded data pulses from a received television signal, a memory for storing acquired coded data pulses, and decoding means for producing from the stored coded data pulses video signals which can be used to effect the display of information represented by the stored coded data pulses. The television receiver arrangement may include suitable television display means, or it may be adapted to feed the video signals into a separate television monitor.

It has been found desirable to further include in the television receiver srrangement a signal quality arrangement which is arranged to become operative to inhibit the acquisition for storage, coded data pulses which are contained in a received television signal which has a noise content higher than a predetermined threshold. Such a signal quality arrangement aims at minimising the acquisition for storage of "noise-corrupted" coded data pulses which are likely to result in an unintelligible display. It also aims at preventing coded data pulses which are already stored and are suitable for an intelligible display of the information which they represent from being adversely affected by such "noise-corrupted" coded data pulses. This adverse effect is a possibility because the operation of the television receiver arrangement is normally such that once a page has been selected, the coded data pulses therefor are acquired each time they occur in the recurrent transmission cycle and are freshly stored by overwriting the notionally identical coded data pulses which were acquired and stored in a previous transmission cycle.

United Kingdom patent specificaton GB-A-l 568 184 discloses a known signal quality arrangement for determining the signal quality of a received television signal. This known arrangement functions by combining the magnitudes of a locally generated line synchronising pulse and a corresponding line synchronising pulse separated from the received television signal, and integrating the combined magnitude over a specified line synchronising pulse period to produce an output voltage, the arrangement producing an inhibiting signal to prevent data acquisition when the output voltage attains a threshold value. This known signal quality arrangement gives acceptable performance when the specified line synchronising pulse period is constant, that is, as defined for any particular one television transmission system. However, in the design of a television receiver arrangement of the kind specified for use selectively in a number of different television transmission systems, it has been found that the range of line synchronising pulse widths that may be encountered with a good television signal makes the use of this known signal quality arrangement impracticable.

It is an object of the present invention to provide an alternative form of signal quality arrangement which does not suffer from this limitation.

According to the present invention, there is provided a television receiver arrangement of the kind specified which includes a signal quality arrangement which is arranged to become operative to inhibit the acquisition for storage of coded data pulses which are contained in a received television signal which has a noise content higher than a predetermined tbreshold, which signal quality arrangement comprises, separator means responsive to a received television signal to produce therefrom a pulse signal waveform containing line, field and equalising pulses and any spurious noise pulses, as present in the received television signal in the portion(s) thereof not containing any information content, means for counting the number of pulses that occur in said pulse signal waveform in a given period, and means for producing an inhibiting signal to inhibit coded data pulse acquisition when said number exceeds a predetermined value.

The present invention is based on the recognition that when a noisy television signal is received, spurious pulses are introduced into the pulse signal waveform which is separated therefrom. The number of these spurious pulses is related to the extent of the noise and therefore provide a reliable means of indicating whether reception is "good" or "bad".

In carrying out the invention, said given period can correspond to a number of line periods, means being provided to effect a count of the pulses in each of said number of line periods to determine whether the relevant received television line is "bad" in that it contains more then a set number of pulses, and further means being provided to count the number of "bad" lines that occur in said number of line periods, said inhibiting signal being produced when this number of "bad" lines exceeds a predetermined number. Conveniently, said given period is a field period.

Hysteresis may be embodied in the signal quality arrangement by requiring that a predetermined number (of "bad" lines) of one value has to be reached when the inhibiting signal is already being produced to maintain that signal, whereas a predetermined number of a larger value has to be reached to cause the inhibiting signal to be produced when it is not already being produced.

A signal quality arrangement according to the invention can further include means for counting in said given period the number of line periods in which no pulses occur and for causing said inhibiting signal to be produced when the number of such line periods exceeds a predetermined value. As will be described, such line periods are also considered to contain "bad" lines.

Also, integrating means may be provided to prevent the production or the cessation of the inhibiting signal, as the case may be, until in a successive number of said given periods, received television lines are all detected as "bad" or "good", as relevant.

The invention also provides a method of selectively inhibiting in a television receiver arrangement the acquisition of coded data pulses which are contained in a television signal in television lines where no picture signals representing normal picture information are present, which method consists in, producing from a received television signal a pulse signal waveform containing line, field and equalising pulses, and any spurious noise pulses, as present in the received television signal in the portion(s) thereof not containing any information content, determining when the number of pulses that occur in this pulse signal waveform in each line period exceeds a set number, counting in each field period the number of line periods containing more than said set number of pulses, detecting when this count attains a predetermined number and inhibiting the acquisition of coded data pulses when this detection occurs in a given number of successive fields.

In order that the invention may be more fully understood, reference will now be made by way of example to the accompanying drawings, of which:-

Figure 1 is a block diagram of a television transmission system of the character reference to;

Figure 2 is a block diagram of a television receiver arrangement of the kind specified;

Figure 3 is a block diagram of a signal quality arrangement in accordance with the invention; and

Figure 4 shows idealised pulse signal waveforms.

Referring to the drawings, the television transmission system there shown embodies a composite television receiver arrangement for displaying selectively either a television picture which is produced from picture information in a normal over-air broadcast or cable television video signal, or alpha-numeric text or other teletext information which is produced from coded data pulses which are transmitted in the video signal in vertical or field-blanking intervals thereof. The possibility can also exist for displaying the teletext information concurrently with a television picture for instance as sub-titles or captions which are superimposed onto the television picture. Furthermore, the system could be adapted for "full-channel" operation, as aforesaid.

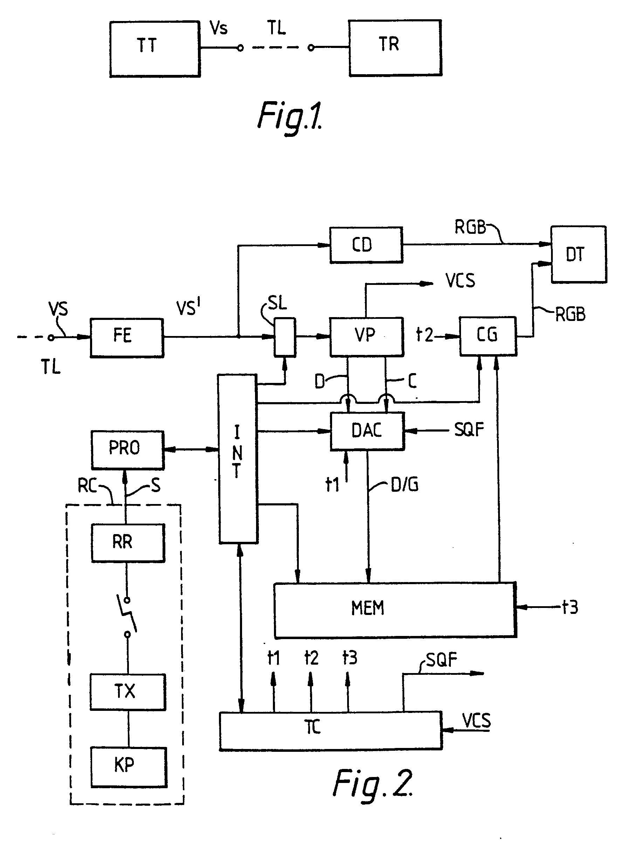

As shown generally in Figure 1, the system comprises a television transmitter TT, and a television receiver arrangement TR which is adapted to receive a television video signal VS via a conventional over-air broadcast or cable transmission link TL. The transmitter TT includes in known manner means for producing television picture information, means for producing alpha-numeric text or other teletext information, and further means for generating the television video signal VS containing picture signals representative of the picture information and coded data pulses representative of the teletext information, together with the usual synchronising and equalizing pulses which are necessary for the operation of the television receiver arrangement. The television receiver arrangement TR comprises the usual amplifying, tuning and i.f. detector circuits at its front end, together with video and data processing circuits as will now be considered with reference to Figure 2.

The composite television receiver arrangement shown in Figure 2 has its front end FE connected to receive the incoming television video signal VS. For normal picture display in the television receiver arrangement, the demodulated video signal VS' is applied to a colour decoder which produces the R,G, and B component signals for the picture display. Time base circuits for a display tube DT would receive the usual line and field synchronising pulses from a sync. seperator circuit which extracts these synchronising pulses from the video signal VS'. The element CD represents the colour decoder and these other circuit elements which are provided for conventional picture display.

The demodulated video signal VS' is also applied selectively via a selection circuit SL to another section of the television receiver arrangement which deals with the display of the alphanumeric text and other teletext information that is received in digitally coded form. This section comprises a video processor circuit VP which performs inter alia data slicing for retrieving the coded data pulses D from the video signal VS'. The video processor VP also produces regenerated clock pulses C from the data pulses D. The data pulses D are fed together with the clock pulses C to a data acquisition circuit DAC which is operable to feed selected groups D/G of the coded data pulses to a memory MEM as address and display information. The memory MEM has a capacity for storing at least one page of information. A logic processor PRO is operable in accordance with select signals S applied to it from a remote control arrangement RC to control which groups of coded data pulses are acquired by the data acquisition circuit DAC. The arrangement RC has a receiver part RR and a remote transmitter part comprising a transmitter TX and a keypad KP. The processor PRO is further operable to read out from the memory MEM display information for the selected page, for application to a character generator CG which provides R,G,B component signals for the display. A timing circuit TC provides timing signals on connections tl to t3 for the circuit elements DAC, MEM and CG. These circuit elements and the timing circuit TC are accessed by the processor PRO via an interface circuit INT. The operation of the timing circuit TC is synchronised with the received video signal VS' by a composite pulse signal VCS which contains the line, field and equalising pulses which are separated from the video signal VS' in the video processor VP.

In the television receiver arrangement shown in Figure 2, only single line connections have been shown for the interconnections between the various circuit elements for the sake of simplicity. However, it will be apparent to a person skilled in the art that in practice most of these interconnections would be multi-line. For instance, whereas the coded data pulses D retrieved from the video signal VS' would be applied serially to the data acquisition circuit DAC over a single connection, serial-to-parallel conversion would take place within this circuit DAC, so that the groups D/G of coded data pulses would be applied to the memory DAC in parallel over a multi-line connection. The connection between the processor PRO and the interface circuit INT can be a so-called I²C bus (see Mullard Technical publication M83-0196). The processor PRO can be a commercially available microcomputer; e.g. from the MAB 8400 Series (Philips). Although a composite television receiver arrangement is examplified in Figure 2, it will be appreciated that the section for data acquisition together with the front end FE may be provided as a separate teletext decoder which is adapted to feed either a television display monitor or a conventional television receiver.

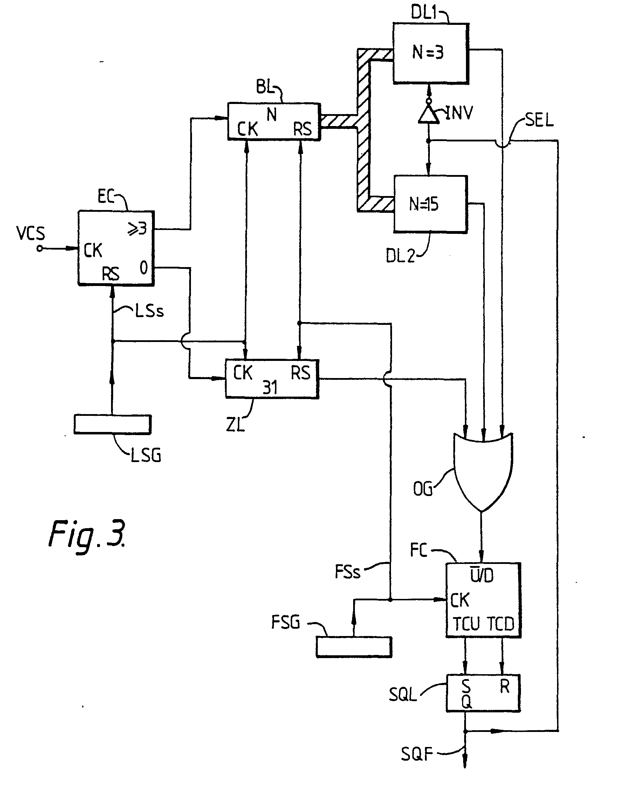

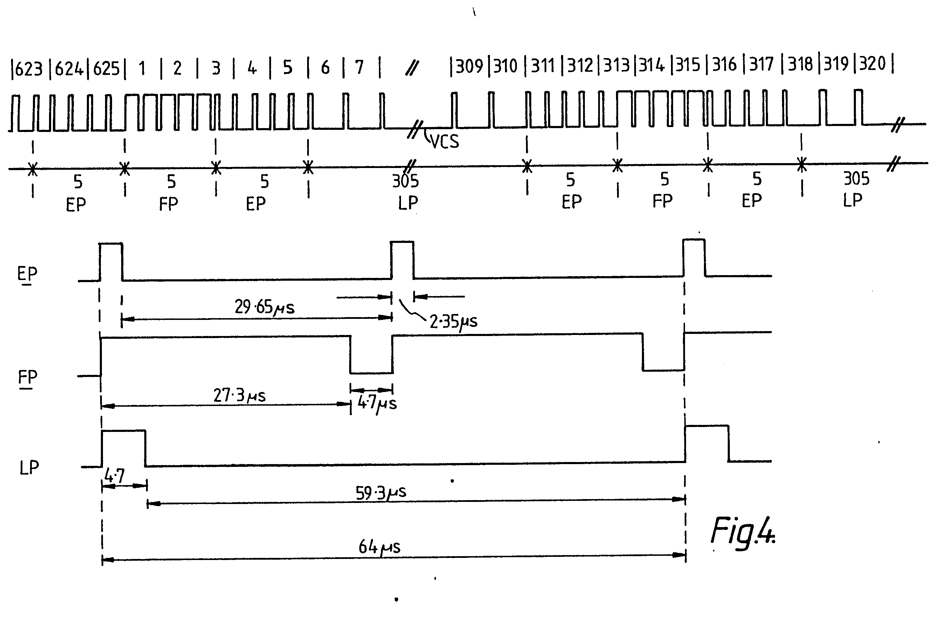

The signal quality arrangement shown in Figure 3 conveniently forms part of the timing circuit TC. This arrangement comprises an "edge" counter EC, a "bad line" counter BL, a "zero line" counter ZL, two decoder/latch circuits DLI and D12, an OR-gate OG. a "field" counter FC, a "signal quality" flag latch SQL, and line and field rate signal generators LSG and FSG. The composite pulse signal VCS is applied to the clock input CK of the counter EC. An idealised waveform for this pulse signal VCS is shown in Figure 4. This waveform shows the occurrence of line and field synchronising pulses LP and FP and equalising pulses EP in a standard 625-line television transmission format. The respective periods for these pulses LP, FP and EP as they occur in a 64μs line period are also shown in Figure 4.

When a noisy video signal VS' is received at the input of the video processor VP, spurious pulses are introduced into the composite pulse signal VCS. the number of spurious pulses being related to the extent of the noise. In a practical implementation of the video processor VP. it has been found that these spurious pulses are more frequent in the region of the field and equalising pulses due to an automatic gain control function provided in the video processor VP. The signal quality arrangement operates to determine signal quality by counting the number of pulses that occur within a certain time period. Conveniently, this time period corresponds to a line period.

Considering now the operation of the signal quality arrangement, the counter EC counts each pulse rising edge occurring in the signal VCS applied at its clock input CK. The counter EC is reset once per line period by a signal LSs applied to its reset input RS from the signal generator LSG. It can be seen from Figure 4 that when the signal VCS is noise free, only one rising edge will be counted in most line periods, and only two in the line periods in which the field and equalising pulses FP and EP occur. Therefore, if three or more rising edges are counted in a line period the line is declared bad, in that the counter EC, which is suitably a 2-bit counter, will produce an active logic level at output " 3". The counter BL is enabled by this active logic level and will thus effect a count of one when the signal LSs is applied to its clock input CK. The counter BL thereafter counts each bad line until it is reset at the end of the field period by a signal FSs applied to its reset input RS from the signal generator FSG.

The count produced by the counter BL is applied for decoding to the two decoder/latch circuits DLI and D12. Only one or other of these two circuits DLI and D12 is operable at any time, as determined by a select signal SEL applied thereto. When the select signal SEL has a high logic level the latch D12 is enabled. This condition obtains when a signal quality flag SQF produced by the latch SQL also has a high logic level which signifies that reception is "good". When the select signal SEL has a low logic level, the latch DLI is enabled via an inverter INV. This latter condition obtains when the signal quality flag SQF also has a low logic level signifying that reception is "bad". The flag SQF is assumed to serve as the select signal SEL in the simplified functional diagram of Figure 2. The data acquisition circuit (DAC Figure 2) is inhibited from acquiring data when the flag SQF signifies that reception is "bad".

If there are more than N bad lines in a field period, the field is declared "bad" (The field period is chosen to ensure that the effects of the field and equalising pulses on the automatic gain control function in the video processor VP and the tendency for more spurious pulses to occur in the region of these pulses are taken into account). Hysteresis is incorporated into the signal quality detection by using different values for N. In the present embodiment N = 3 (i.e. latch DLI is enabled) when the signal quality flag SQF is currently set at "bad" and N = 15 (i.e. latch D12 is enabled) when the signal quality flag is currently set at "good".

Assume at the outset of an operating sequence that the flag SQF is set at "good", so that latch D12 is enabled. If data reception is in fact "good", then the counter EC will not enable the counter BL which therefore does not perform a count at this time. Thus, the enabled latch D12 (and also the latch D11) will input a low logic level via the OR-gate QG to the up/down enable input U/D of the counter FC which will therefore count up by 1 in each field. when the signal FSs is applied to its clock input CK at the end of each field. The counter FC is a 2-bit counter so that after a maximum of 3 such fields, whilst signal quality is "good", it will update the "good" setting of the flag SQF by applying a high logic level at its output TCU to the set input S of the latch SQL. When data reception becomes "bad", the counter EC will enable the counter BL for the lines concerned, so that this counter will effect a count of 1 for each such "bad" line. If the count reaches 15 in a field. then the circuit D12 will be latched to input a high logic level to the counter FC which will therefore count down by 1. After 3 such fields, the counter FC will produce a high logic level at its output TCD to reset the latch SQL by applying this level to its reset input R and thus change the active level of the flag SQF to signify that reception is "bad". The latch DLI is now enabled, so that the flag SQF stays at this active logic level to signify that reception is "bad", whilst there are at least 3 bad lines in subsequent fields. Because of the hysteresis effect of the two latches DLI and D12, 3 successive "good" fields (i.e. with less than 3 bad lines in each have to be received before the field counter FC can reach its "up" terminal count to set the latch SQL to change the flag SQF from low to high active logic level to signal that reception is "good" again.

The counter ZL is provided to safeguard against "bad" data reception being detected incorrectly in a situation in which, in the video processor VP, an oscillator from which locally generated synchronising pulses are derived is free-running instead of being phase-locked to an incoming video signal. These locally generated synchronising pulses are used for the display of data which has already been received and stored in the television receiver arrangement. This situation can occur because no external television signal is being received, or because an external television signal which is being received is so noise-corrupted that the inhibiting signal has already been produced to inhibit data acquisition. In this situation it has been found that zero edges will be detected in some lines. A line without any pulses on it could indicate no input and therefore bad signal quality, but an apparently blank line could be produced if the oscillator free runs too fast, as the line timing to the signal quality detector would have a period less than 64μs. Suitably, 31 such lines are allowed to occur in a field before the field is declared "bad". This ensures that a signal of good signal quality is detected as such even when the oscillator is running 5% fast. Also in this situation. the hysteresis provided in the signal quality arrangement governs the switching of the oscillator between phase-locked and free-running operation, to reduce substantially "jump" or "jitter" which might otherwise occur in the display.

## Claims

1. A television receiver arrangement suitable for use in a television transmission system of a character in which coded data pulses representing alpha-numeric text or other information are transmitted in a television signal in television lines where no picture signals representing normal picture information are present; which television receiver arrangement includes data selection and acquisition means for acquiring selectively coded data pulses from a received television signal, a memory for storing acquired coded data pulses, decoding means for producing from the stored coded data pulses video signals which can be used to effect the display of information represented by the stored coded data pulses, and a signal quality arrangement which is arranged to become operative to inhibit the acquisition for storage of coded data pulses which are contained in a received television signal which has a noise content higher than a predetermined threshold; and which television receiver arrangement is characterised in that said signal quality arrangement comprises separator means responsive to a received television signal to produce therefrom a pulse signal waveform containing line, field and equalising pulses, and any spurious noise pulses, as present in the received television signal in the portion(s) thereof not containing any information content, means for counting the number of pulses that occur in said signal waveform in a given period, and means for producing an inhibiting signal to inhibit coded data pulse acquisition when said number exceeds a predetermined value.

2. A television receiver arrangement as claimed in Claim 1, characterised in that said given period corresponds to a number of line periods. means being provided to effect a count of the pulses in each of said number of line periods to determine whether the relevant received television line is "bad" in that it contains more than a set number of pulses, and further means being provided to count the number of "bad" lines that occur in said number of line periods, said inhibiting signal being produced when this number "bad" lines exceeds a predetermined number.

3. A television receiver arrangement as claimed in Claim 2, characterised in that said given period is a field period.

4. A television receiver arrangement as claimed in Claim 2 or Claim 3, characterised in that hysteresis means are embodied in the signal quality arrangement, whereby a predetermined number (of "bad" lines) of one value has to be reached when the inhibiting signal is already being produced to maintain that signal, whereas a predetermined number of a larger value has to be reached to cause the inhibiting signal to be produced when it is not already being produced.

5. A television receiver arrangement as claimed in any preceding Claim, characterised by including means for counting in said given period the number of line periods in which no pulses occur and for causing said inhibiting signal to be produced when the number of such line periods exceeds a predetermined value.

6. A television receiver arrangement as claimed in any one of Claims 2 to 5, characterised by including integrating means for preventing the production or the cessation of the inhibiting signal, as the case may be, until in a successive number of said given periods, received televison lines are all detected as "bad" or "good" as relevant.

7. A method of selectively inhibiting in a television receiver arrangement the acquisition of coded data pulses which are contained in a television signal in television lines where no picture signals representing normal picture information are present, which method is characterised by producing from a received television signal a pulse signal waveform containing line, field and equalising pulses, and any spurious noise pulses, as present in the received television signal in the portion(s) thereof not containing any information content, determining when the number of pulses that occur in this pulse signal waveform in each line period exceeds a set number, counting in each field period the number of line periods containing more than said set number of pulses, detecting when this count attains a predetermined number, and inhibiting the acquisition of coded data pulses when this detection occurs in a given number of successive fields.

**Patentansprüche**

1. Fernsehempfänger zum Gebrauch in einem Fernsehübertragungssystem bei dem alphanumerischen Text oder andere Information darstellende kodierte Datenimpulse in einem Fernsehsignal übertragen werden und zwar in Fernsehzeilen, in denen es keine normale Bildinformation darstellenden Bildsignale gibt, wobei dieser Fernsehempfänger Datenselektions- und -erfassungsmittel aufweist zum Erfassen selektiv kodierter Datenimpulse aus einem empfangenen Fernsehsignal, weiterhin einen Speicher zum Speichern erfasster kodierter Datenimpulse, Dekodiermittel zum aus den gespeicherten kodierten Datenimpulsen Erzeugen von Video-Signalen, die zum Wiedergeben von durch die gespeicherten kodierten Datenimpulse dargestellter Information verwendet werden können, sowie eine Signalqualitätsanordnung, die wirksam wird zum Unterdrükken der Erfassung zu speichernder kodierter Datenimpulse, die in einem empfangenen Fernsehsignal mit einem Störpegel höher als eine vorbestimmte Schwelle vorhanden sind und wobei dieser Fernsehempfänger dadurch gekennzeichnet ist, dass die genannte Signalqualitätsanordnung Trennmittel aufweist, die auf ein empfangenes Fernsehsignal reagieren zum Erzeugen einer Impulssignalwellenform mit Zeilen-, Bild- und Entzerrungsimpulsen sowie jeglichen Störimpulsen, wie diese in dem empfangenen Fernsehsignal in dem(n)jenigen Teil(en) desselben, der (die) überhaupt keine Information aufweist(en), vorhanden sind, Mittel zum Zählen der Anzahl Impulse, die in der genannten Signalwellenform während einer bestimmten Periode auftreten und Mittel zum Erzeugen eines Signals zum Unterdrücken der Erfassung kodierter Datenimpulse, wenn die genannte Anzahl einen vorbestimmten Wert überschreitet.

2. Fernsehempfänger nach Anspruch 1, dadurch gekennzeichnet, dass die genannte bestimmte Periode einer Anzahl Zeilenperioden entspricht, wobei Mittel vorgesehen sind zum Durchführen einer Zählung der Impulse in jeder der genannten Anzahl Zeilenperioden zum Ermitteln, ob die betreffende empfangene Fernsehzeile "schlecht" ist, indem sie mehr als eine festgelegte Anzahl Impulse aufweist und wobei weiterhin Mittel vorgesehen sind zum Zählen der Anzahl "schlechter" Zeilen, die in der genannten Anzahl Zeilenperioden auftreten, wobei das genannte Unterdrückungssignal erzeugt wird, wenn diese Anzahl "schlechter" Zeilen eine vorbestimmte Anzahl überschreitet.

3. Fernsehempfänger nach Anspruch 2, dadurch gekennzeichnet, dass die genannte bestimmte Periode eine Bildperiode ist.

4. Fernsehempfänger nach Anspruch 2 oder 3, dadurch gekennzeichnet, dass in der Signalqualitätsanordnung Hysteresemittel vorgesehen sind, wobei eine vorbestimmte Anzahl ("schlechter" Zeilen) ein und desselben Wertes erreicht werden muss, wenn das Unterdrückungssignal zum Beibehalten dieses Signals bereits erzeugt worden ist, während eine vorbestimmte Anzahl mit einem grösseren Wert erreicht werden muss um das Unterdrückungssignal zu erzeugen, wenn das Unterdrückungssignal nicht erzeugt worden ist.

5. Fernsehempfänger nach einem der vorstehenden Ansprüche, dadurch gekennzeichnet, dass er Mittel zum in der genannten bestimmten Periode Zählen von Zeilenperioden aufweist, in denen keine Impulse auftreten und die dafür sorgen, dass das genannte Unterdrückungssignal erzeugt wird, wenn die Anzahl derartiger Zeilenperioden einen vorbestimmten Wert überschreitet.

6. Fernsehempfänger nach einem der Ansprüche 2 bis 5, dadurch gekennzeichnet, dass er Integrationsmittel aufweist um zu vermeiden, dass das Unterdrückungssignal erzeugt oder gegebenenfalls eingestellt wird bis in einer aufeinanderfolgenden Anzahl der genannten bestimmten Perioden empfangege Fernsehzeilen alle, je nachdem, als "schlecht" oder "gut" detektiert worden sind.

7. Verfahren zum in einem Fernsehempfänger selektiven Unterdrücken des Erfassens kodierter Datenimpulse, die in einem Fernsehsignal vorhanden sind und zwar in Fernsehzeilen, in denen es keine normale Bildinformation darstellenden Bildsignale gibt, dadurch gekennzeichnet, dass aus einem empfangenen Fernsehsignal eine Impulssignalwellenform erzeugt wird, die Zeilen-, Bild- und Entzerrungsimpulse sowie jegliche Störimpulse aufweist, wie diese in dem empfangenen Fernsehsignal in dem(n)jenigen Teil(en), der (die) überhaupt keine Information aufweist(en), vorhanden sind, und dass ermittelt wird, wenn die in dieser Impulssignalwellenform in jeder Zeilenperiode auftretende Anzahl Impulse eine festgelegte Anzahl überschreitet, dass in jeder Bildperiode die Anzahl Zeilenperioden mit mehr als die festgelegte Anzahl Impulse gezählt werden, dass detektiert wird, wenn diese Zählung eine vorbestimmte Anzahl erreicht und dass die Erfassung kodierter Datenimpulse unterdrückt wird, wenn diese Detektion in einer bestimmten Anzahl aufeinanderfolgender Bilder auftritt.

**Revendications**

1. Dispositif récepteur de télévision propre à être utilisé dans un système de transmission par télévision, dans lequel des impulsions de données codées représentant du texte alphanumérique ou d'autres informations sont transmises dans un signal de télévision dans des lignes de télévision exemptes de signaux d'image représentant de l'information d'image normale, ce dispositif récepteur de télévision comprenant un dispositif de sélection et de saisie de données destiné à saisir des impulsions de données codées sélectivement dans un signal de télévision, une mémoire pour stocker des impulsions de données codées saisies, un dispositif décodeur pour produire, à partir des impulsions de données codées stockées, des signaux vidéo pouvant être utilisés pour assurer l'affichage de l'information représentée par les impulsions de données codées stockées, et un dispositif assurant la qualité du signal qui intervient pour interdire la saisie en vue du stockage d'impulsions de données codées qui sont contenues dans un signal de télévision reçu présentant un niveau de bruit supérieur à un seuil prédéterminé, le dispositif récepteur de télévision étant caractérisé en ce que le dispositif assurant la qualité du signal comprend un dispositif séparateur réagissant à un signal de télévision reçu pour produire, à partir de ce signal, une forme d'onde de signal d'impulsions contenant des impulsions de lignes, de trames et d'égalisation ainsi que d'éventuelles impulsions de bruits parasites, présentes dans le signal de télévision reçu dans la ou les parties de celui-ci qui ne contiennent pas d'information, un dispositif pour compter le nombre d'impulsions qui se présentent dans la forme d'onde de signal d'impulsions dans une période donnée et un dispositif pour produire un signal d'interdiction en vue d'interdire la saisie de données codées lorsque le dit nombre excède une valeur prédéterminée.

2. Dispositif récepteur de télévision suivant la revendication 1, caractérisé en ce que la période donnée correspond à un certain nombre de périodes de lignes, un dispositif étant prévu pour compter les impulsions dans chaque susdit nombre de périodes de lignes en vue de déterminer si la ligne de télévision reçue en question est "mauvaise", par le fait qu'elle contient un nombre d'impulsions supérieur à un nombre fixé, et un autre dispositif étant prévu pour compter le nombre de lignes "mauvaises" qui se présentent dans le dit nombre de périodes de lignes, le signal d'interdiction étant produit lorsque ce nombre de lignes "mauvaises" excède un nombre prédéterminé.

3. Dispositif récepteur de télévision suivant la revendication 2, caractérisé en ce que la dite période donnée est une période de trame.

4. Dispositif récepteur de télévision suivant la revendication 2 ou 3, caractérisé en ce qu'une hystérésis est prévue dans le dispositif assurant la qualité du signal par le fait qu'un nombre prédéterminé (de lignes "mauvaises") d'une valeur doit être atteint lorsque le signal d'interdiction est déjà en cours de production, pour maintenir ce signal, tandis qu'un nombre prédéterminé d'une valeur plus élevée doit être atteint pour provoquer la production du signal d'interdiction lorsqu'il n'est pas déjà en cours de production.

5. Dispositif récepteur de télévision suivant l'une quelconque des revendications précédentes, caractérisé en ce qu'il comprend un dispositif pour compter, dans la dite période donnée, le nombre de périodes de lignes dans lesquelles aucune impulsion ne se présente et pour provoquer la production du signal d'interdiction lorsque le nombre de ces périodes de lignes excède une valeur prédéterminée.

6. Dispositif récepteur de télévision suivant l'une quelconque des revendications 2 à 5, caractérisé en ce qu'il comprend un dispositif intégrateur pour empêcher la production ou la cessation du signal d'interdiction, suivant le cas, jusqu'à ce que, dans un nombre successif des périodes données, les lignes de télévision reçues soient toutes détectées comme "mauvaises" ou "bonnes" suivant le cas.

7. Procédé pour interdire sélectivement, dans un dispositif récepteur de télévision, la saisie d'impulsions de données codées qui sont contenues dans un signal de télévision dans des lignes de télévision exemptes de signaux d'image représentant de l'information d'image normale, ce procédé étant caractérisé en ce qu'on produit, à partir d'un signal de télévision reçu, une forme d'onde de signal d'impulsions contenant des impulsions de lignes, de trames et d'égalisation, ainsi que d'éventuelles impulsions de bruits parasites présentes dans le signal de télévision reçu dans la ou les parties de celui-ci qui ne contiennent pas d'information, on détermine lorsque le nombre d'impulsions qui se présentent dans cette forme d'onde de signal d'impulsions dans chaque période de ligne excède un nombre fixé, on compte dans chaque période de trame le nombre de périodes de lignes contenant un nombre d'impulsions supérieur au nombre fixé, on détecte le moment où ce compte atteint un nombre prédéterminé et on interdit la saisie d'impulsions de données codées lorsque cette détection se produit dans un nombre donné de trames successives.

Fig.1.

Fig.2.

Fig.3.

Fig.4.